# EUROPEAN PATENT APPLICATION

(11) **EP 2 262 236 A2**
(43) Date of publication of application: **15.12.2010**
(21) Application number: 10152155.7
(22) Date of filing: 29.01.2010
(51) Int. Cl.: H04N 5/445

(54) **Apparatus and method for displaying electronic program guide content**

(30) Priority: 09.06.2009 KR 20090051167
(71) Applicant: SAMSUNG ELECTRONICS CO., LTD., Suwon-si Gyeonggi-do 442-742 (KR)
(72) Inventor: Yoon, Yeo-ri, Suwon-si, Gyeonggi-do (KR); Lee, Chang-soo, Seoul (KR); Lee, Sang-hee, Seoul (KR)
(74) Representative: Robinson, Ian Michael

(57) **Abstract**

Provided are a method and apparatus for displaying electronic program guide (EPG) content for a plurality of programs, the method including: receiving the EPG content for the plurality of programs; and displaying tags associated with the received EPG content in a tag cloud.

## Description

### BACKGROUND OF THE INVENTION

### Field of the Invention

Apparatuses and methods consistent with the present invention relate to content displaying, and more particularly, to displaying electronic program guide (EPG) content.

### Description of the Related Art

An EPG guide or interactive program guide (IPG) or electronic service guide (ESG) is a digital guide to scheduled broadcast television or radio programs, typically displayed on-screen with functions allowing a viewer to navigate, select, and discover content by time, title, channel, genre, etc., by use of their remote control, a keyboard, or other input devices such as a phone keypad.

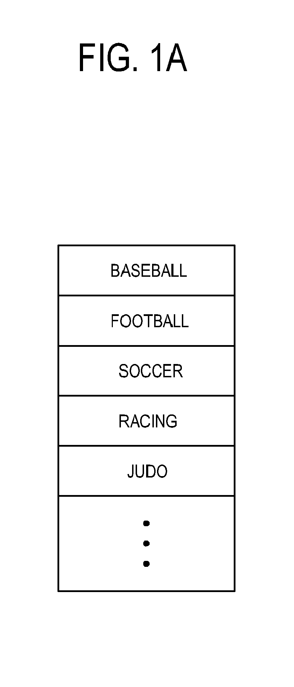

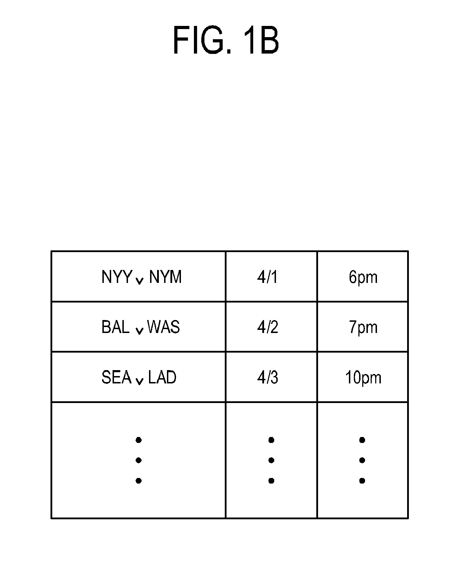

Generally, displaying EPG content on a display device includes providing a grid or list of information about current and future programs provided by a content provider. FIG. 1 illustrates an example of EPG content included in a broadcast stream. However, displaying EPG content in a grid or list format can be cumbersome to navigate and thus inconvenient for a user. Consequently, there is a need for an improved, more user-friendly interface for providing EPG content.

### SUMMARY OF THE INVENTION

According to the present invention there is provided an apparatus and method as set forth in the appended claims. Other features of the invention will be apparent from the dependent claims, and the description which follows.

Exemplary embodiments of the present invention overcome the above disadvantages and other disadvantages not described above. Also, the present invention is not required to overcome the disadvantages described above, and an exemplary embodiment of the present invention may not overcome any of the problems described above.

Aspects of the present invention provide an apparatus and method for displaying EPG content for a channel and/or a plurality of channels in a tag cloud format.

According to an exemplary embodiment of the present invention, a method of displaying electronic program guide (EPG) content for a plurality of programs is provided, the method including: receiving the EPG content for the plurality of programs; and processing the received EPG content to determine tags associated with the EPG content; displaying the tags in a tag cloud.

The method may further include parsing the received EPG content in order to determine the tags.

The method may further include grouping the tags into a plurality of categories. The plurality of categories may be defined so as to distinguish between past, present and future programs. The plurality of categories may be defined so as to distinguish among program information relating to past viewing frequency. The plurality of categories may be defined according to a user's input. The plurality of categories may be defined so as to distinguish between different program genres.

The different program genres may be extracted from the received EPG content.

The method may further include displaying tags for each category such that the tags for each category are visually distinguishable from tags for other categories.

The displaying of the tags for each category may be performed such that the tags for each category are displayed according to a unique combination of visual attributes including at least one of font size, font style, font color, font brightness, transparency, background color, borders, motion, underlines, italics, strikethroughs, three dimensional representation of depth, shadowing and location.

According to another exemplary embodiment of the present invention, an apparatus for displaying electronic program guide (EPG) content for a plurality of programs is provided, the apparatus including: a receiver which receives the EPG content for the plurality of programs; and an EPG processor which parses the received EPG content and determines tags associated with the received EPG content.

The EPG processor may group the tags into a plurality of categories and then output the tags and information about their respective categories. The EPG processor may define the plurality of categories so as to distinguish between past, present and future programs. The EPG processor may define the plurality of categories so as to distinguish among program information relating to past viewing frequency. The EPG processor may define the plurality of categories according to a user's input. The EPG processor may define the plurality of categories so as to distinguish between different program genres. The EPG processor may extract different program genres from the received EPG content.

The apparatus may further include a display which displays the tags and information about their respective categories output from the EPG processor.

The display may display the tags such that the tags for each category are visually distinguishable from tags for other categories. The display may display the tags for each category such that the tags for each category are displayed according to a unique combination of visual attributes including at least one of font size, font style, font color, font brightness, transparency, background color, borders, motion, underlines, italics, strikethroughs, three dimensional representation of depth and shadowing.

Additionally, it should be noted that the above-noted exemplary embodiments and other aspects of the present invention are not limited to software implementation, but can also be implemented through various hardware apparatuses and systems.

### BRIEF DESCRIPTION OF THE DRAWINGS

The above and/or other aspects of the present invention will become apparent and more readily appreciated from the following description of the exemplary embodiments, taken in conjunction with the accompanying drawings of which:
FIG. 1A illustrates an example of EPG content included in a broadcast stream;
FIG. 1B illustrates an example of EPG content included in a broadcast stream;
FIG. 2 illustrates a display screen according to an exemplary embodiment of the present invention;
FIG. 3 illustrates visually distinguishable tags according to an exemplary embodiment of the present invention;
FIG. 4 illustrates a flowchart according to an exemplary embodiment of the present invention;
FIG. 5A illustrates an apparatus according to an exemplary embodiment of the present invention;
FIG. 5B illustrates an apparatus according to an exemplary embodiment of the present invention;
FIG. 6 illustrates an EPG processor according to an exemplary embodiment of the present invention;
FIG. 7 illustrates categorizing tags according to an exemplary embodiment of the present invention;
FIG. 8 illustrates categorizing tags into genres according to an exemplary embodiment of the present invention;
FIG. 9 illustrates categorizing tags into genres according to an exemplary embodiment of the present invention;
FIG. 10A illustrates displaying categorized tags by genre according to an exemplary embodiment of the present invention;
FIG. 10B illustrates displaying a tag cloud according to an exemplary embodiment of the present invention.
FIG. 10C illustrates displaying a tag cloud according to an exemplary embodiment of the present invention.

### DETAILED DESCRIPTION OF THE EXEMPLARY EMBODIMENTS

Hereinafter, exemplary embodiments of the present invention will be described with reference to accompanying drawings, wherein like numerals refer to like elements and repetitive descriptions will be avoided as necessary.

The term "program information" generally refers to information obtained from EPG content. Such program information may be included within the EPG content in the broadcast stream, or alternatively, the program information may be derived from EPG content in the broadcast stream. As used herein, the term "program information" refers to both information included within an EPG content and information derived from EPG content.

FIG. 1A illustrates an example of program information which may be included in a broadcast stream. In this example, the program information included in the broadcast stream is related to different types of sports programs: e.g., baseball, football, soccer, etc. In addition to different types of sports programs, more detailed information may also be included in the program information.

For example, as shown in FIG. 1B, specific baseball games (e.g., NYY v. NYM, BAL v. WAS and SEA v. LAD) and their respective dates and times may also be included in the program information. Of course, the program information is not limited to sports programs. Exemplary embodiments of the present invention could equally apply to other types of programs and program information.

As used herein, the term "tags" refers to words or identifiers related to program information. Generally, tags can include any information included in the EPG content within the broadcast stream. For example, tags may include information such as title, brief description, date, time, channel number, detailed description, rating indicators, repeat broadcast information, etc. Alternatively, tags may be derived from the EPG content. Additionally, tags may pertain to a single channel, a plurality of channels, or a combination of both.

As noted above, tags can be extracted or derived from EPG content in the broadcast stream. For example, the program information shown in FIG. 1A could be parsed to determine different tags for different types of sports programs available to a viewer, e.g., BASEBALL, FOOTBALL, SOCCER, JUDO, RACING, etc. Once obtained, the tags can be arranged in a "tag cloud," which is a visual depiction or arrangement of the tags that permits a user to distinguish between the displayed tags. By displaying different tags differently within the tag cloud, a user can determine additional information about the content represented by the tags.

For example, a user might want to be able to quickly determine which programs are currently being broadcast and those that are scheduled to be broadcast in the future. To accomplish this, sports programs can be categorized into two categories: present programs and future programs. Using this categorization, those sports programs which are currently being displayed might have one value, while future programs can have a different value. Again, this "value" information might be included within the EPG content in the broadcast stream, or it might be derived from the EPG content. By using such information, multiple tags can be displayed in a tag cloud so as to be visually distinguishable from each other.

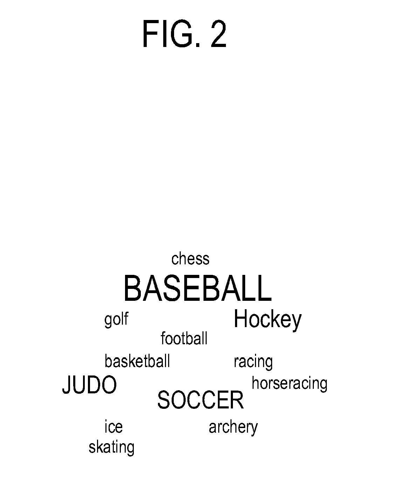

An example of such a display is shown in FIG. 2. As shown in FIG. 2, some tags are displayed in uppercase letters (e.g., current programs) while others are displayed in lower case letters (e.g., future programs). Consequently, a user viewing the tag cloud in FIG. 2, can quickly determine which programs are currently being offered (e.g., BASEBALL, SOCCER, HOCKEY, ARCHERY, etc.), and those that are being offered in the future (e.g., golf, football, chess, racing, etc.).

Tag clouds are typically displayed as an arrangement having a cloud-like shape. However, the present invention is not limited to the typical display format. Instead, tags could be displayed in many different forms, including both 2-dimensional and even 3-dimensional geometrical representations.

As noted above, the program information is not limited to sports or any general categories. Similarly, the categorization of tags is not limited to simply present and future programs. For example, an additional category can be defined for past programs saved in memory. Alternatively, a user might categorize tags based on a viewing frequency, or based on the popularity of the programs, either by other users (assuming such information is available, via the broadcast stream, for example) or by the user herself.

However, a user is not confined to the example categories described above. Indeed, a user could use the program information available in the broadcast stream (or from saved program information) to define custom categories suited to her individual viewing preferences. Thus, categories for tags can be defined based on predetermined categories, or they can be defined based on the user's personal preferences.

As noted above, in the example of FIG. 2, the tags of the two different categories are displayed differently. Tags for current programs are displayed using all caps (e.g., "BASEBALL"), and tags for future programs are displayed using all lower case (e.g., "racing"). While only two examples are shown in FIG. 2, tags can be displayed in many different ways so that user can visually distinguish between tags of separate categories.

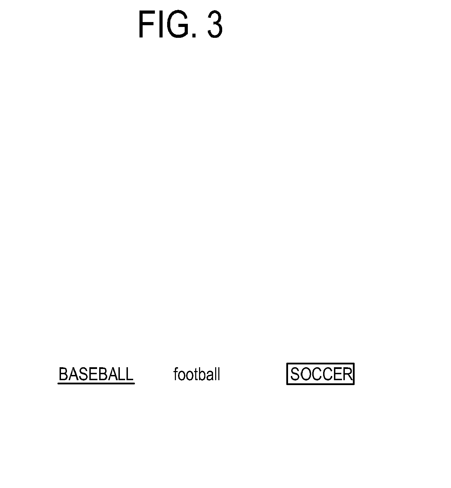

For example, FIG. 3 shows three additional examples of how tags can be visually distinguishable from one another. Specifically, the displaying of the tags for each category may be performed such that the tags for each category are displayed according to unique visual attributes including things like font size, font style, font color, font brightness, transparency, background color, borders, motion, underlines, italics, strikethroughs, blinking, three-dimensional representations of depth, shadowing and location.

Moreover, different combinations of such attributes may be used to uniquely represent a category. Furthermore, exemplary embodiments of the present invention are not limited to the examples noted above, but may also include other attributes which, when employed, permit displayed tags from different categories to be visually distinguishable from each other.

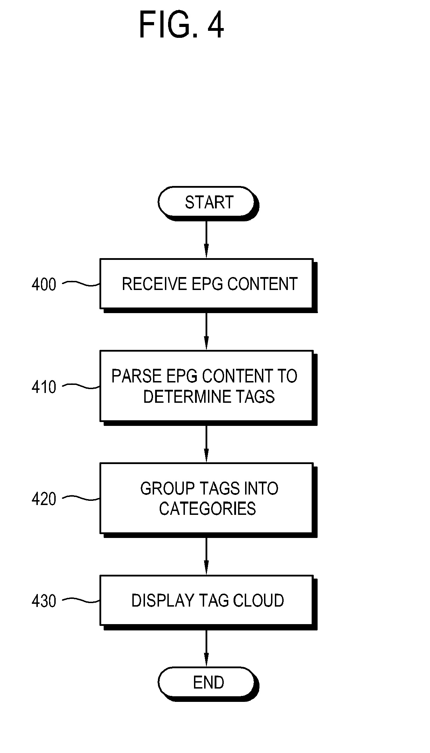

FIG. 4 illustrates a flowchart according to an exemplary embodiment of the present invention. In operation 400, the EPG content is received. Then, in operation 410, the received EPG content is parsed in order to determine the tags. In operation 420, the tags are grouped into separate categories, and in operation 430, the tag cloud is displayed based on the grouping of the tags into the respective categories.

It should be noted that, according to exemplary embodiments of the present invention, user operations (not shown) could also be included in the flowchart of FIG. 4. For example, the process of FIG. 4 could include an operation (not shown) to determine whether a user has entered a command to display the tag cloud. Similarly, the process of FIG. 4 could also include an operation (not shown) to determine whether a user has entered a command to configure a custom tag cloud.

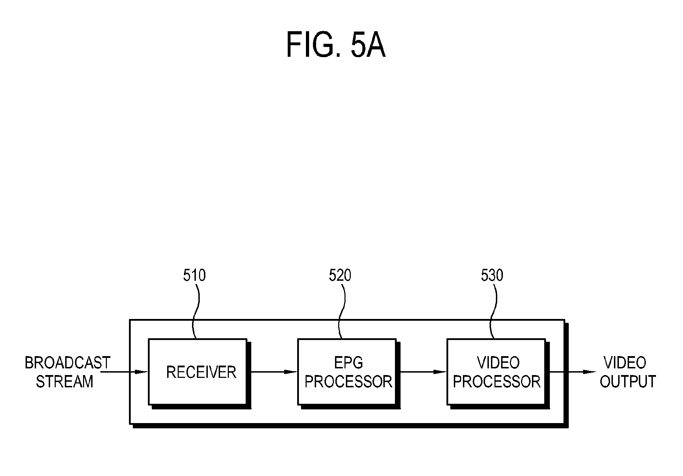

FIG. 5A illustrates an apparatus 500 according to an exemplary embodiment of the present invention. As shown in the figure, the apparatus includes a receiver 510 which receives the EPG content from a broadcast stream, an EPG processor 520 which determines the tags based on the received EPG content, and a video processor 545 which displays the tag cloud using the tags output by the EPG processor. Although FIG. 5A shows both the receiver 510 and the video processor 545 within the apparatus 500, the present invention is not limited to this exemplary embodiment. For example, the receiver and/or the display might be located externally with respect to the EPG processor 520.

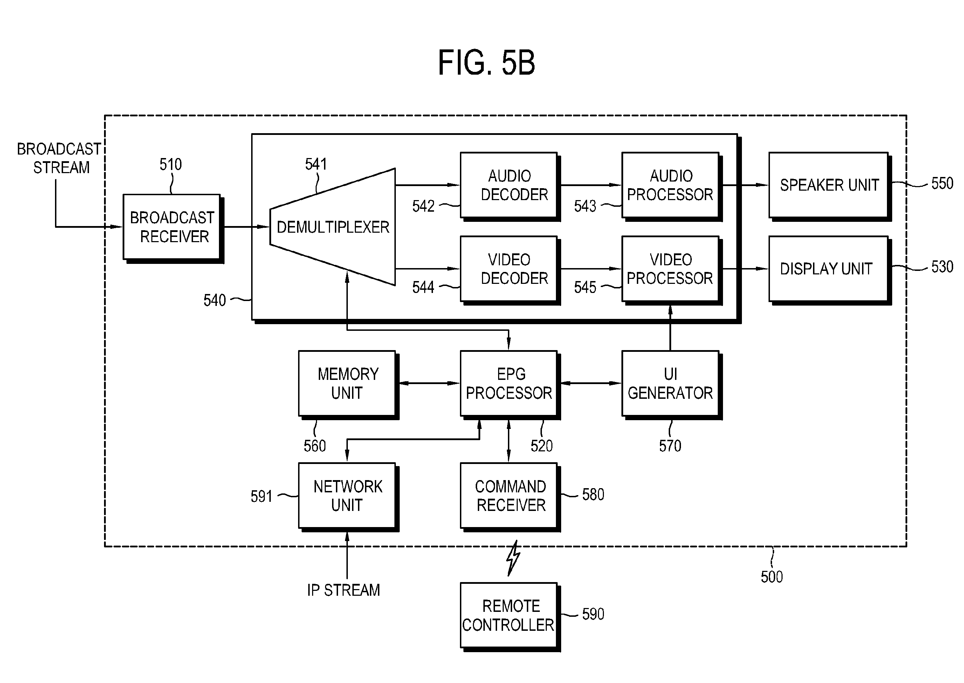

FIG. 5B shows a more detailed view of an apparatus according to an exemplary embodiment of the present invention. As shown in FIG. 5B, the apparatus could also include an A/V processor 540 having a demultiplexer 541 which demuxes the incoming signal into its audio and video constituent parts. The audio signal output by the demultiplexer 541 is sent to the audio decoder 542, an audio processor 543 and ultimately to a speaker unit 550. The video signal output by the demultiplexer 541 is decoded by decoder 544 and then processed by video processor 545. The demultiplexer 541 also outputs a video signal to the EPG processor 520. The EPG processor 520 is connected to a memory unit 560 from which the EPG processor 520 can access, inter alia, stored EPG content and/or stored tags. After processing the EPG content and determining the tags and EPG content, the EPG processor 520 outputs the tags and/or EPG content to the user interface (UI) generator 570 so that the tags and/or EPG content can be mixed with the processed video signal thus overlaid onto the image displayed on the video processor 545. The EPG processor 520 is also connected to a command receiver receives commands from a command receiver 580 which communicates with a user via a remote controller 590. Alternatively, the EPG processor 520 can send/receive commands to/from a user via a network unit 591.

Although FIG. 5B shows the receiver 510 as receiving the broadcast stream, the network unit 591 can also connect to the internet (not shown) and receive the broadcast stream and output the broadcast stream to the A/V processor. Alternatively, another network unit (not shown) could be employed to receive the broadcast stream.

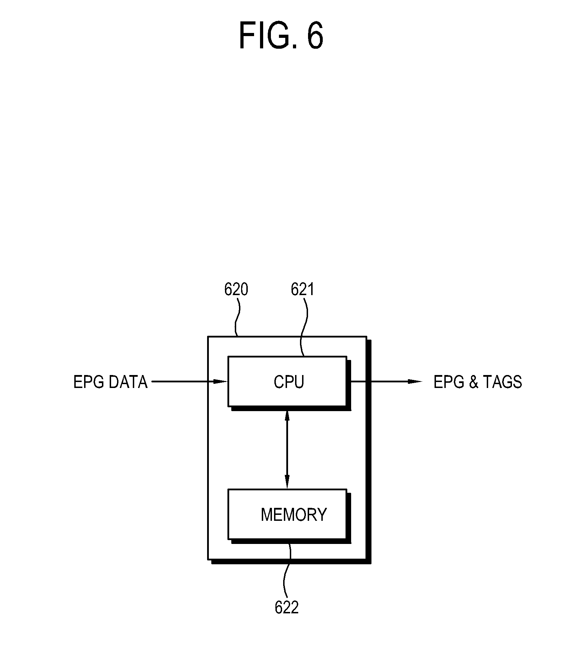

Additionally, while the exemplary embodiment shown in FIG. 5B shows a memory unit 560, external to the EPG processor 520, from which the EPG processor 520 can access stored EPG content and/or stored tags, the EPG processor could have an internal memory which could store EPG content and/or tags. FIG. 6 shows an example of such a configuration, wherein the EPG processor 620 includes a central processing unit (CPU) 621 and an internal memory 622. As shown in FIG. 6, EPG content is input into the EPG processor 620. The CPU 621 can then store certain EPG content and/or tags into the internal memory 622. The CPU 621 can then access and process stored EPG content and/or tags within the internal memory 622, and output the processed EPG content and/or tags.

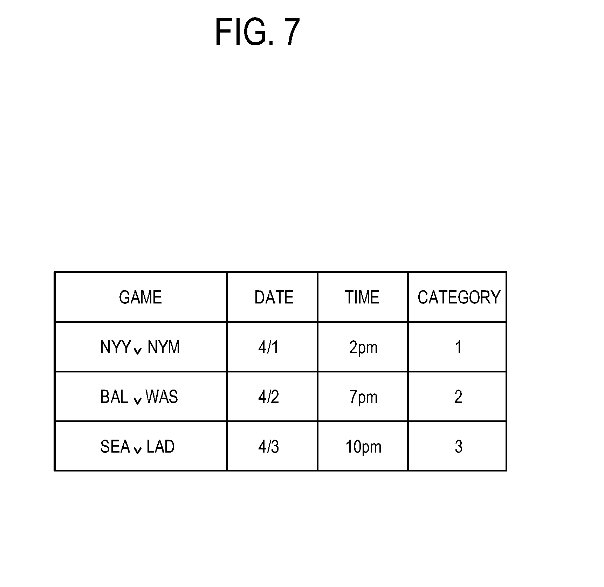

As described above, the EPG content can be processed and categorized in many different ways. The table shown in FIG. 7, for example, illustrates a categorization of baseball game programs. In FIG. 7, tags three separate games are listed: "NYY v. NYM," "BAL v. WAS" and "SEA v. LAD," including their respective dates and times. The final column shows a weighted value, or categorization number for each game. In other words, "NYY v. NYM" is in category 1, "BAL v. WAS" is in category 2, and "SEA v. LAD" is in category 3. The respective categories might, for example, distinguish between past, present and future programs, or between a preferred ranking of favorite teams, or among high definition (HD) or non-HD channels, etc. In any case, the specific categorization rules are irrelevant. For the exemplary embodiment of the present invention, it is sufficient that the tags can be categorized in some way so as to distinguish among them. In addition, it should be noted that although the example shown in FIG. 7 only includes game name, date and time, the EPG content could also include other relevant details such as channel number, detailed description of the program, rating indicators, repeat broadcast information, etc.

Similarly, while the example of FIG. 7 shows each tag having a separate category, a 1:1 relationship between tags and categories is not required. Instead, groups of tags may share a particular categorization number. For example, a user might designate her favorite teams as NYM and WAS. In such a case, the games "NYY v. NYM" and "BAL v. WAS" could be set to be in category 1, while "SEA v. LAD" could be set to category 2 (not shown). Again, this is just but one example, and many different categorizations are possible.

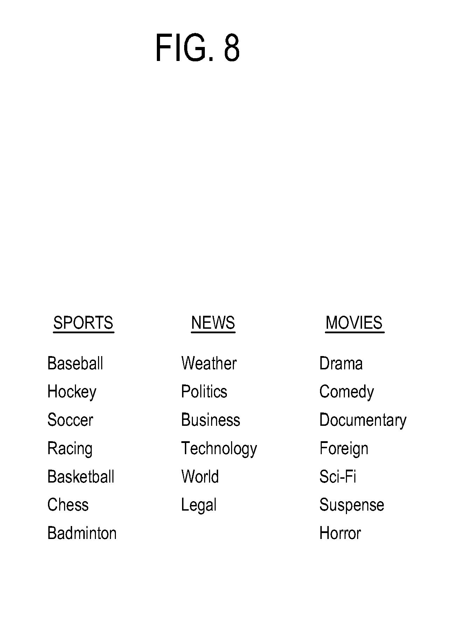

In addition, the categorization of tags does not have to be limited to one particular type of EPG content. Instead, layers of categories can be created and interconnected. For example, as noted above, FIG. 7 shows a categorization of tags associated with baseball games. On the other hand, FIG. 8 shows a broader categorization of programs. In FIG. 8 tags corresponding to different genres (i.e., "SPORTS," "NEWS" and "MOVIES") are defined as different categories. Each genre is defined so as to include tags which might logically fit within it. The "SPORTS" category might thus include a range of different sports programs, including baseball and other things, such as the categorized sub-list shown in FIG. 7, for example. That is, the broader categorization of tags shown in FIG. 8 can be linked to the lower-level tags shown in FIG. 7 (e.g., the tags of FIG. 7, "NYY v. NYM," "BAL v. WAS" and "SEA v. LAD," could be linked to the SPORTS/BASEBALL tags shown FIG. 8).

However, a user might also want to show additional detail in a tag cloud. For example, a user might choose to designate her favorite genres and desire for the chosen favorites to be distinguishable in the displayed tag cloud. Given the three genres SPORTS, NEWS and MOVIES, a user might designate both SPORTS and NEWS to be favorites (and not designate MOVIES as a favorite genre). To show both SPORTS and NEWS as favorite genres, a weight value could be used to designate between favorite/non-favorite statuses.

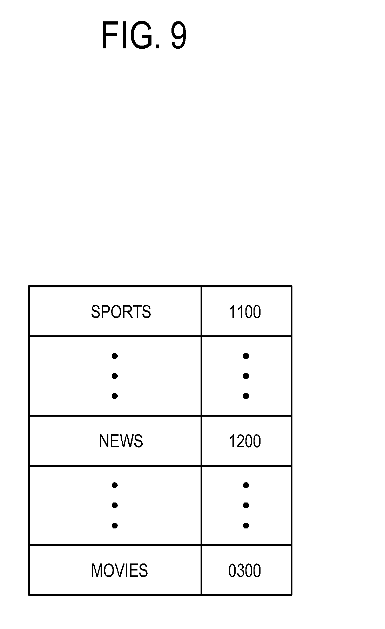

FIG. 9 shows an example of such a weighting scheme. Here, the most significant digit has a value of "1" or "0" to distinguish between a favorite and a non-favorite genre. In this example, both SPORTS and NEWS could be shown in a tag could as having a common display characteristic (e.g., blinking tags) (not shown), whereas the MOVIES tag could have a different display characteristic (e.g., non-blinking) (not shown). In this way, additional weight values can be employed to display additional detail within a tag cloud. Generally, the complexity of the weighting scheme depends on the desired complexity of the tag clouds to be displayed.

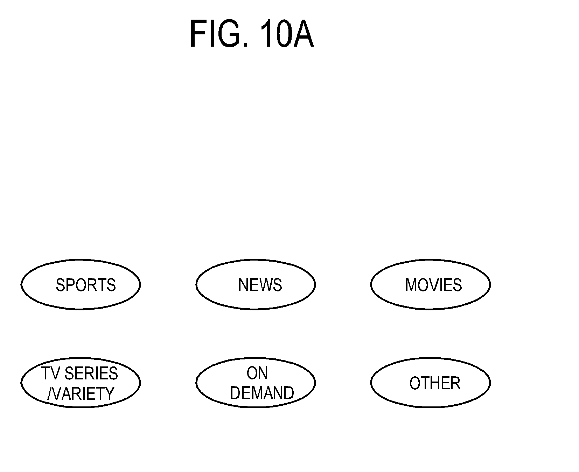

FIG. 10A illustrates displaying categorized tags by genre according to an exemplary embodiment of the present invention. As shown in FIG. 10A, tags for different genres are displayed. A user can select any one of the displayed genres. Once a user selects a specific genre, additional detail for the selected genre can be displayed. For example, if a user selects the SPORTS genre, additional detail could be shown such as the tag cloud illustrated in FIG. 2.

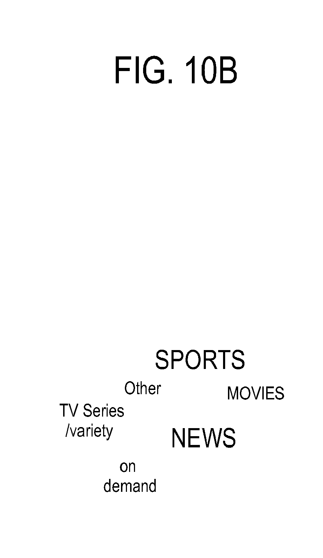

Alternatively, the genre tags could also be shown as a tag cloud. For example, FIG. 10B shows a tag cloud of the genres listed in FIG. 10A. Such a tag cloud could be generated, for example, by using a numerical weighting of a detailed categorization of tags, such as described above with respect to FIG. 9. Again, a user can select any one of the displayed genres, and once selected, additional detail for the selected genre can be displayed. For example, if a user selects the SPORTS genre, additional detail could be shown such as the tag cloud illustrated in FIG. 2.

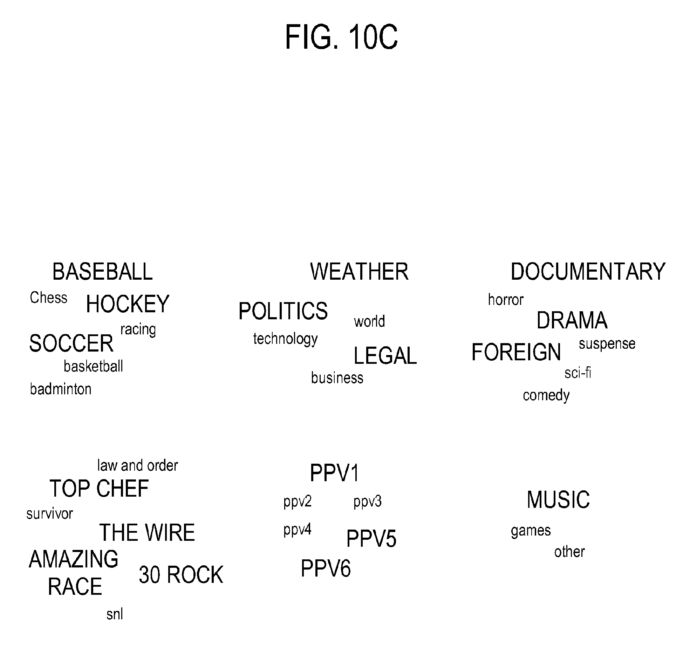

FIG. 10C shows yet another alternative display of the genres listed in FIG. 10A. As shown in FIG. 10C, the subcategories of each genre can be displayed in a tag cloud. For example, in the SPORTS genre, each of the subcategories of the sports programs shown in FIG. 8 are displayed in a tag cloud. Likewise, each of the subcategories of the other genres can be displayed as tag clouds.

Additionally, it should be noted that displaying of the tag cloud does not need to be limited to EPG content which is currently being received. Instead, EPG content may be saved to a memory (not shown), and the processing of the EPG content and the displaying of the tags could occur with respect to the saved EPG content. For example, saved program information related to programs which have previously recorded and saved in memory can be read from the memory and then categorized and displayed in a tag cloud or clouds such as described above. Consequently, a user could create a tag could display for all such recorded programs saved in memory.

Furthermore, it should be noted that while the examples discussed hereinabove involve tag clouds which display a single categorization (e.g., past/present/future OR favorite/non-favorite), exemplary embodiments of the present invention are not limited to displaying a single categorization. Instead, by using multiple combinations of visual attributes for the tags (e.g., font size, font style, font color, font brightness, transparency, background color, borders, motion, underlines, italics, strikethroughs, blinking, three-dimensional representations of depth, shadowing and location), it is possible to display tag clouds (not shown) which include multiple categorizations (e.g., past/present/future AND favorite/non-favorite).

The foregoing exemplary embodiments are merely exemplary and are not to be construed as limiting the present invention. The present teaching can be readily applied to other types of methods and apparatuses. Also, the description of the exemplary embodiments of the present invention is intended to be illustrative, and not to limit the scope of the claims, and many alternatives, modifications, and variations will be apparent to those skilled in the art.

## Claims

1. A method of displaying electronic program guide (EPG) content for a plurality of programs, the method comprising:
receiving the EPG content for the plurality of programs;
processing the received EPG content to determine tags associated with the EPG content; and
displaying the tags in a tag cloud.

2. The method according to claim 1, wherein the tags are derived from the received EPG content.

3. The method according to claim 1, further comprising grouping the tags into a plurality of categories.

4. The method according to claim 3, wherein the plurality of categories are defined so as to distinguish between past, present and future programs.

5. The method according to claim 3, wherein the plurality of categories are defined so as to distinguish among program information relating to past viewing frequency.

6. The method according to claim 3, wherein the plurality of categories are defined according to a user's input.

7. The method according to claim 3, wherein the plurality of categories are defined so as to distinguish between different program genres.

8. The method according to claim 7, wherein the different program genres are extracted from the received EPG content.

9. The method according to claim 3, further comprising displaying tags for each category such that the tags for each category are visually distinguishable from tags for other categories.

10. The method according to claim 9, wherein the displaying of the tags for each category is performed such that the tags for each category are displayed according to a unique combination of visual attributes including at least one of font size, font style, font color, font brightness, transparency, background color, borders, motion, underlines, italics, strikethroughs, three dimensional representation of depth, shadowing and location.

11. An apparatus for displaying electronic program guide (EPG) content for a plurality of programs, the apparatus comprising:
a receiver which receives the EPG content for the plurality of programs; and
an EPG processor which parses the received EPG content and determines tags associated with the received EPG content.

12. The apparatus according to claim 11, wherein the EPG processor groups the tags into a plurality of categories and then outputs the tags and information about their respective categories.

13. The apparatus according to claim 12, wherein the EPG processor defines the plurality of categories so as to distinguish between different program genres.

14. The apparatus according to claim 12, further comprising a display which displays the tags and information about their respective categories output from the EPG processor.

15. The apparatus according to claim 14, wherein the display displays the tags such that the tags for each category are visually distinguishable from tags for other categories.
